# EUROPÄISCHE PATENTSCHRIFT

(11) **EP 1 234 765 B1**
(45) Veröffentlichungstag und Bekanntmachung des Hinweises auf die Patenterteilung: **03.05.2006**
(21) Anmeldenummer: 02003608.3
(22) Anmeldetag: 16.02.2002
(51) Int. Cl.: B65B 9/04, B65B 59/04, B29C 51/26, B29C 33/30

(54) **Schnellwechselvorrichtung an einer Tiefzieh-Verpackungsmaschine**
Quick-change device for a deep-draw packaging machine
Dispositif de changement rapide pour une machine d'emballage par étirage

(30) Priorität: 20.02.2001 DE 10108163
(43) Veröffentlichungstag der Anmeldung: 28.08.2002
(73) Patentinhaber: VARIOVAC PS SystemPack GmbH, 19246 Zarrentin (DE)
(72) Erfinder: Pohle, Claus, 21244 Buchholz (DE); Dunkel, Günter, 21244 Buchholz (DE)
(74) Vertreter: Schupfner, Georg

(56) Entgegenhaltungen:
- EP-A- 0 467 069
- DE-A- 10 022 269
- US-A- 5 940 953

## Beschreibung

Die Erfindung bezieht sich auf eine Vorrichtung an einer Tiefzieh-Verpackungsmaschine mit Bearbeitungsstationen, zu denen eine Tiefziehstation, in der mittels eines Arbeitswerkzeuges aus einer durchlaufenden Unterfolie Aufnahmemulden ausgeformt werden, und eine Siegelstation gehören, in der die Aufnahmemulden nach dem Einbringen von Gegenständen mittels einer ebenfalls durchlaufenden Folie verschlossen werden, wobei die Formen der Aufnahmemulden und der diese umrandenden oberen Verschweißrandbereiche vom Format der zum Einsatz kommenden Arbeitswerkzeuge bestimmt werden, die zum Formatwechsel austauschbar sind.

Derartige Tiefzieh-Verpackungsmaschinen sind bekannt; sie haben einen langgestreckten Maschinenrahmen, auf dem sich die Bearbeitungsstationen befinden. Zwischen diesen Bearbeitungsstationen für das Verformen der Aufnahmemulden und das Aufsiegeln einer Deckfolie befindet sich eine Behandlungsstrecke, in deren Verlauf Gegenstände in die Aufnahmemulden eingelegt werden. Die Arbeitswerkzeuge in den Bearbeitungsstationen bestehen immer aus einem Unterteil und einem Oberteil, wobei das Unterteil gegen das Oberteil gefahren wird. In der Tiefziehstation wird zur Herstellung der Aufnahmemulden die vorgewärmte Unterfolie mit Druckluft, Vakuum oder einem anderen Formverfahren gegen die Form der Formplatte gedrückt. In der Siegelstation wird ein dem Unterteil der Tiefziehstation entsprechendes Unterteil nach oben gefahren, wobei sich die Aufnahmemulden der tiefgezogenen Unterfolie in den Mulden des Unterteiles einschieben. Die Siegelplatte des Siegeloberteiles der Siegelstation fährt nach unten und siegelt die Oberfolie auf die die Aufnahmemulden umrandenden oberen Verschweißbereiche auf. Vor dem Versiegeln können die Packungen noch evakuiert und/oder evakuiert und begast werden.

Es gibt verschiedene Formen für die auf der Tiefzieh-Verpackungemaschine zu verpackenden Produkte. Für die unterschiedlichen Verpackungen werden unterschiedliche Arbeitswerkzeuge, die jeweils aus einem Oberteil und einem Unterteil bestehen, benötigt. Das bedeutet, dass für die verschiedenen auf der Maschine zu fahrenden Verpackungen verschiedene Arbeitswerkzeuge nötig sind, die gewechselt werden müssen.

Tiefzieh-Verpackungsmaschinen aufweisend Format-Wechselvorrichtung sind bereits bekannt. Aus der EP 0 467 069-A sind auf Gleitschienen gelagert Werkzeugunterteile bekannt, die Rastelemente aufweisen und die Werkzeugunterteile in einer Arbeitsposition fixieren. Das Werkzeugunterteil kann seitlich entnommen werden. US 5,940,953 offenbart einen heranfahrbaren Wagen zur Abnahme von Werkzeugplatten, wie sie ggf. auch in Tiefziehmaschinen eingesetzt werden können, wobei die Werkzeuge mit Hilfe eines Greifmechanismus einseitig ergriffen und die Werkzeugplatte dann mittels einer Kippbewegung nach oben geschwenkt werden. Die Format-Wechselvorrichtung erlauben jedoch nicht die Lagerung der Werkzeugplatten an oder in der Verpackungsmaschine und ermöglichen ebenso keinen weitgehend automatisierten Austausch in oder an der Tiefziehmaschine bevorrateter Werkzeugplatten.

Es ist bekannt, bei langbauenden Maschinen hintereinander beispielsweise zwei Tiefzieh- und Siegelstationen anzuordnen, von denen immer jeweils eine in Betrieb genommen wird. Wenn in der Baulänge nicht genügend Platz für eine solche Maschine mit Mehrfachstationen zur Verfügung steht, also nur jeweils eine Tiefziehstation und eine Siegelstation untergebracht werden können, müssen die Arbeitswerkzeuge ausgetauscht werden. Dies ist sehr umständlich und zeitaufwendig, weil der Raum im Bereich der Bearbeitungsstationen mit maschinellen Bauteilen angefüllt ist. Frei ist in der Regel nur der Bereich eines Arbeitstaktes vor und hinter den Formatwerkzeugen, wobei der Zugriff zu den Formatunterteilen durch die in der Maschine befindliche Folie versperrt wird. Man schneidet die Folien auf und greift von oben in die Maschine. Beim Aufschneiden wird die Folie zwangläufig zerstört. Abgesehen von dem Materialverlust führt das zu Verlustzeiten, weil vor einem Neuanlauf der Produktion neue Formen gezogen und die zerstörten Folienbereiche aus der Maschine gefahren werden müssen, bevor das Bestücken wieder beginnen kann.

Es ist Aufgabe der Erfindung, eine Vorrichtung an einer kurzbauenden Tiefzieh-Verpackungsmaschine mit Bearbeitungsstationen zu schaffen, bei der ein Wechsel des Arbeitswerkzeuges schnell und ohne eine Beschädigung der Folien möglich ist.

Die gestellte Aufgabe ist erfindungsgemäß gelöst durch eine Vorrichtung gemäß Anspruch 1. Bevorzugte Ausführungsformen sind Gegenstand der Unteransprüche. Die erfindungsgemäße Vorrichtung weist auf eine Format-Schnellwechselvorrichtung mit wenigstens einer Übergabeablage, die benachbart und auf gleicher Höhe zu dem in seiner Bearbeitungsstation in Ruhestellung befindlichen Arbeitswerkzeug vorgesehen ist, wobei beim Wechsel ein auf die Übergabeablage überstelltes Arbeitswerkzeug über die Übergabeablage in eine Parkposition an oder bei der Verpackungsmaschine überstellbar ist, und wobei eine Übergabeablage für Arbeitswerkzeuge oberhalb der Folien jeweils oberhalb und die Übergabeablage für die Arbeitswerkzeuge unterhalb der Folien jeweils unterhalb der Folien angeordnet ist, sodass der Wechsel des Arbeitswerkzeuges die Folien nicht betrifft.

Nach einer weiteren Ausgestaltung der Erfindung ist vorgesehen, dass die Übergabeablagen entweder flächige Übergabeplattformen sind oder von horizontal verlaufenden Oberkanten von Stützgliedern gebildet werden, die Auflageebenen bilden. Die Form der Übergabeablagen ist den Bedürfnissen entsprechend ausgewählt. Wichtig ist nur, dass neben den Werkzeugen auf gleicher Höhe Ablagen geschaffen sind, auf die die Werkzeuge aus den Bearbeitungsstationen herausgebracht werden können zur weiteren Versetzung in Parkpositionen.

Der Vorteil dieser Vorrichtung besteht darin, dass das Arbeitswerkzeug oder die Arbeitswerkzeuge beim Wechselvorgang zunächst einmal auf die Übergabeablage neben der Bearbeitungsstation überführt werden, die gegebenenfalls bereits einen schnellen und bequemen Zugriff ermöglicht, weil das oder die Arbeitswerkzeuge damit aus dem Bereich der Bearbeitungsstation entfernt sind. Genügt dies nicht oder liegt ein höherer Automatisierungsbedarf vor, dann lässt sich die Übergabeablage ihrerseits so verstellen, dass sie den Wechsel des Arbeitswerkzeuges noch weiter erleichtert. Vorteilhaft ist weiterhin, dass die Folien von dem Wechsel des Arbeitswerkzeuges nicht betroffen sind, weil die Übergabeablagen für die Arbeitswerkzeuge oberhalb der Folien oberhalb und die Übergabeablagen für die Arbeitswerkzeuge unterhalb der Folien unterhalb der Folien angeordnet sind.

Nach einer weiteren Ausgestaltung der Erfindung ist vorgesehen, dass das Siegeloberteil beim Formatwechsel aus seiner Ruhestellung in der Siegelstation im Maschinenbereich und oberhalb der Folien auf Träger der Übergabeablage in einer Übergabeposition aufschiebbar ist, von dem aus die Übergabeablage mit dem auf ihm ruhenden Siegeloberteil einem Fach eines Magazins zustellbar ist, das sich auf dem Maschinenrahmen befindet, und dass im Gegenzug ein Siegeloberteil anderen Formates aus dem Magazin über die verstellbare Übergabeablage in die Siegelstation überführbar ist. Die Siegeloberteile der verschiedenen Formate können also unmittelbar auf der Tiefzieh-Verpackungsmaschine zwischengelagert werden. Die von den Trägern gebildete Übergabeablage sorgt für die Überführung.

Nach einer weiteren Ausgestaltung der Erfindung ist vorgesehen, dass die Träger mit der Übergabeablage mittels eines pneumatisch, hydraulisch oder elektrisch betätigten Hubgerätes zu den Niveaus einzelner Fächer des Magazins verfahrbar sind. Von Hand ist so nur eine Verschiebung des Siegeloberteiles in Ebenen nötig. Der Übergabevorgang lässt sich aber auch voll automatisieren.

Die unterhalb der Folien wirksamen Formatwerkzeuge dienen in der Tiefziehstation dem Ausziehen der Aufnahmemulden und in der Siegelstation dem Stützen der Aufnahmemulden beim Aufschweißen der Oberfolie. Nach einer weiteren Ausgestaltung der Erfindung ist für die unteren Formatwerkzeuge vorgesehen, dass wenigstens eines der Siegelunterteile bzw. Formplatten beim Formatwechsel aus der Ruhestellung in der Tiefziehstation bzw. Siegelstation auf die vor oder hinter dem Werkzeug auf gleicher Höhe befindliche Übergabeablage überführbar ist, die, um die Überführung in die Parkposition zu ermöglichen, in einem leicht zugänglichen Bereich des Maschinenrahmens positionierbar ist, und dass im Gegenzug eine Formplatte aus der Parkposition über die Übergabeablage in die entsprechende Bearbeitungsstation überführbar ist.

Sollte sich der Übergabeplatz der Übergabeablage noch nicht zur bequemen und schnellen Übergabe eignen, dann ist nach einer weiteren Ausgestaltung der Erfindung vorgesehen, dass die Übergabeablage mittels einer Verstellvorrichtung verstellbar ist. Die Verstellvorrichtung kann dabei insbesondere der Höhenverstellung der Übergabeablage dienen.

Nach einer weiteren Ausgestaltung der Erfindung ist vorgesehen, dass die der Verstellung der Übergabeablage an der Siegelstation dienende Verstellvorrichtung an einer Hebevorrichtung angeordnet ist, mit der die Formenplatte in ihre Arbeitsstellung in der Siegelstation anhebbar ist.

Nach einer weiteren Ausgestaltung der Erfindung ist vorgesehen, dass zum Verschieben der Formplatten aus ihren Ruhestellungen in der Tiefzieh- und/oder Siegelstation horizontal wirksame Stellglieder vorgesehen sind. Diese Stellglieder können pneumatisch, hydraulisch, elektrisch oder manuell bewegt werden.

Nach einer weiteren Ausgestaltung der Erfindung ist vorgesehen, dass die Verstellglieder an die Form- oder Siegelunterteile ankuppelbar sind, um diese aus den Ruhestellungen in den Bearbeitungsstationen auf die Übergabeablagen oder von diesen zurück in die Ruhestellungen in der Bearbeitungsstationen zu fördern. Aus den schwierig erreichbaren Bereichen in den Bearbeitungsstationen können die Formplatten so automatisch herausgezogen werden. Ebenso können sie auch wieder automatisch hineingeführt werden. Damit wird die Zeit des Wechselvorganges automatisiert und verkürzt.

Die Erfindung wird anhand der Zeichnung näher erläutert. Es zeigen:
Fig. 1 einen Ausschnitt aus einer Seitenansicht einer Tiefzieh-Verpackungsmaschine mit Übergabeablagen zum erleichterten Auswechseln von Arbeitswerkzeugen,
Fig. 2 einen Arbeitszylinder mit einem Kupplungskopf und daneben ein Teil einer Formplatte mit zugehöriger Kupplungsbuchse,
Fig. 3 die Anordnung nach Fig. 2 in gekuppeltem Zustand.

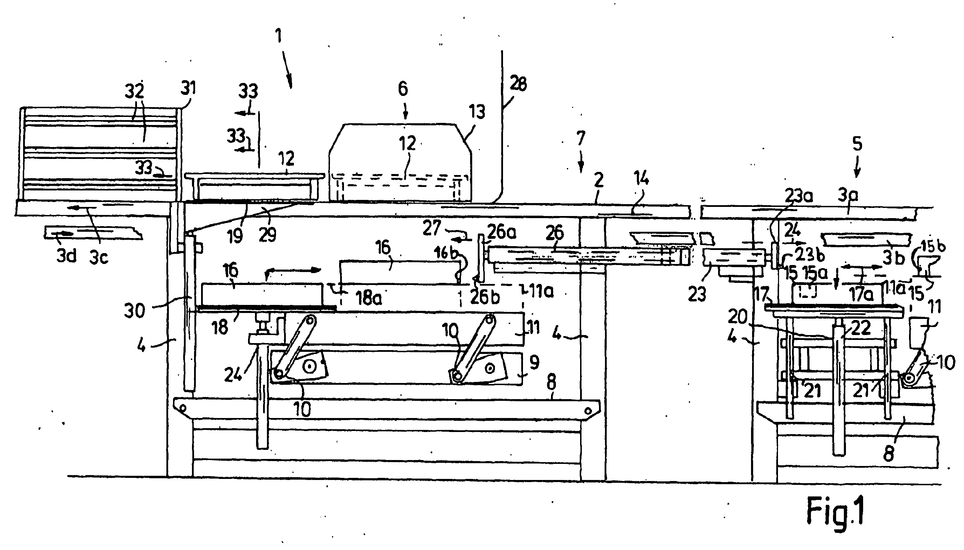

Auf der Tiefzieh-Verpackungsmaschine nach Fig. 1 werden Verpackungen hergestellt, die eine Aufnahmemulde haben, auf deren oben umlaufendem Rand eine Deckfolie aufgeschweißt wird. Die in Fig. 1 ausschnittsweise dargestellte Tiefzieh-Verpackungsmaschine 1 hat einen Maschinenrahmen 2, in dem beidseitig Förderketten 3 umlaufen und zwar einen oberen Trum 3a und einen unteren Trum 3b. Die Förderkette 3 läuft im oberen Trum 3a in Richtung eines Pfeiles 3c und im unteren Trum 3b in Richtung eines Pfeiles 3d. Der Rahmen 2 steht auf Ständern 4. An der Tiefzieh-Verpackungsmaschine 1 sind eine Tiefziehstation 5 und eine Siegelstation 6 angeordnet. Zwischen beiden befindet sich eine Packstation 7. Die Tiefziehstation 5 und die Siegelstation 6 sind auf Bodentraversen 8 aufgebaut, die sich an Stützen 4 abstützen. Die Bodentraversen 8 tragen Lagerblöcke 9, die über Gelenkhebel 10 Hubrahmen 11 auf und nieder fahren können.

Mit einer gestrichelten Linie 11a sind Höhenstellungen der Hubrahmen angedeutet, die der Ruhestellung im Arbeitsablauf entsprechen. Die Arbeitswerkzeuge der Maschine 1 bestehen wie üblich paarweise aus zwei Teilen und zwar einem Oberteil und einem Unterteil, die für die Zeit eines Tiefzieh- und Siegelvorganges zusammengefahren werden. Die Unterteile 15 und 16 der Tiefzieh 5 - und Siegelstation 6, im weiteren als Formplatten bezeichnet, liegen in den mit den gestrichelten Linien 11a angedeuteten Höhenstellungen auf den Hubrahmen 11 auf und werden während des Betriebes aus diesen Höhen in die Arbeitsstellungen hoch- und wieder zurückgefahren. Von den Werkzeugoberteilen ist nur das Siegeloberteil 12 mit seiner Aufnahme 13 dargestellt. Die Formplatte 15 hat Aufnahmevertiefungen 15a zum Einziehen von Aufnahmemulden der Unterfolie 14.

Wenn von einer auf der Maschine laufenden Verpackung zu einer anders gestalteten Verpackung übergegangen werden soll, dann müssen die Arbeitswerkzeuge ausgewechselt werden. Um diesen Wechselvorgang rationell, also schnell und problemlos durchzuführen, sind Übergabeablagen 17,18,19 vorgesehen. Die Übergabeablage 17 und die Übergabeablage 18 bestehen aus körperlichen Übergabeplattformen. Die Übergabeablage 19 wird von den Oberkanten von Trägern 29 gebildet. Die Übergabeablage 19 ist also keine körperliche Platte; sie besteht aus einer Auflageebene, die von den Oberkanten der Träger 29 zum Auflegen des Siegeloberteiles gebildet wird. Die Übergabeablage 17, die zu der Formplatte 15 gehört, ist mittels einer Verstellvorrichtung 20 aus der in der Fig. 1 dargestellten Stellung hochfahrbar. Die Verstellvorrichtung 20 ist an einer Stütze 4 befestigt; sie besteht aus zwei Führungen 21 zur Geradführung und einem Hubmotor 22 zum Anheben der Übergabeablage 17. Die Übergabeablage 17 ist bei Beginn eines Wechselvorganges angehoben in eine gestrichelt angedeutete Höhe 17a. Dies ist die Höhe, die der Höhe der Ruhestellung der Formplatte 15 in der Formstation entspricht. Die Formplatte 15 kann also in einer horizontalen Ebene aus der Tiefziehstation 5 auf die benachbarte Übergabeablage 17 bewegt werden. Dieses Bewegen kann manuell erfolgen. Um den Vorgang zu automatisieren, ist ein in einer horizontalen Ebene arbeitender Arbeitszylinder 23 vorgesehen. Dieser Arbeitszylinder 23 fährt mit einem Mitnehmerkopf 23a in Richtung eines Pfeiles 24 auf die Formplatte 15 zu und kuppelt an diese an. Zum Ankuppeln dient ein Kuppelkopf 23b, der in eine Kupplungsmuffe 15b der Formplatte einfällt und mittels Federarmen 15c (nicht dargestellt) in dieser festgeklemmt wird.

Der Arbeitszylinder zieht nun die Formplatte 15 auf die benachbarte Übergabeablage 17, wobei die Formplatte auf ihrem Weg gegen einen nicht dargestellten festen Anschlag auf der Übergabeablage aufläuft und die Kupplung 23b, 15b getrennt wird. Die Formplatte 15 kann von dort abgenommen und in eine Parkposition an der Maschine oder in ihrer Nähe gebracht werden. Eine Formplatte 17 anderen Formates wird auf die Übergabeablage 17 aufgelegt und von dem Hubzylinder 23 in die Tiefziehstation eingeschoben. Wenn es die maschinenbaulichen Verhältnisse nicht zulassen, die Formplatte 15 in der Höhe der Ruhestellung abzunehmen, dann fährt die Verstellvorrichtung 20 die Übergabeablage nach oben oder nach unten, wie es in der Zeichnung dargestellt ist. Von dort aus kann dann der Wechsel der Formplatten 15 von Hand, aber auch maschinell erfolgen. Die Parkposition kann ohne weiteres zum maschinellen Wechsel ausgelegt sein.

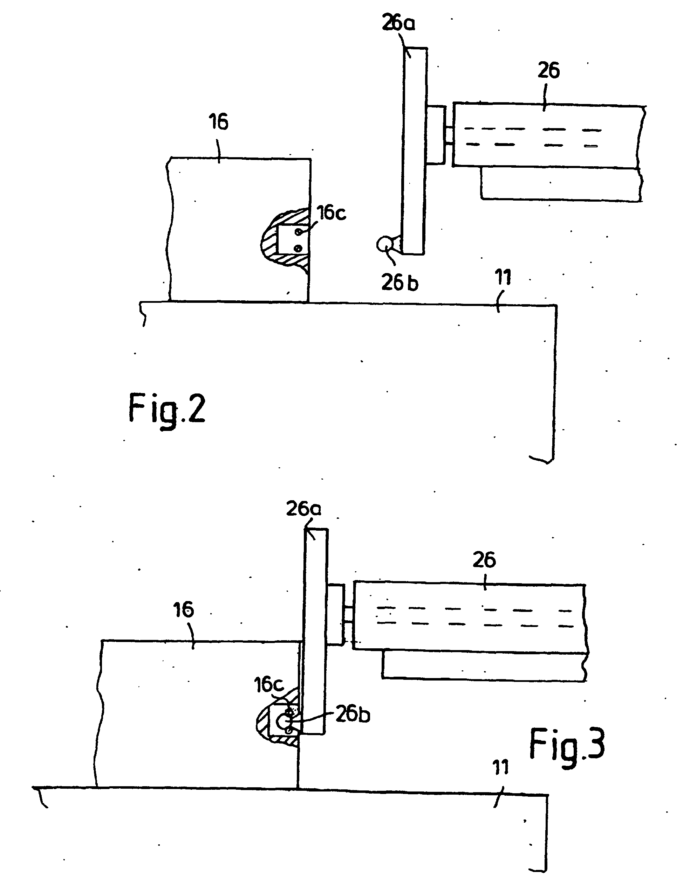

In der Siegelstation 6 ist eine Verstellvorrichtung 24 für die Übergabeablage 18 vorgesehen, die an den Hubrahmen 11 angelegt und mit diesem höhenverstellbar ist. Die Verstellvorrichtung 24 hat einen Hubmotor 25, der seinerseits die Übergabeablage 18 heben und senken kann. Die Übergabeablage 18 ist bei Beginn eines Wechselvorganges angehoben in eine gestrichelt angedeutete Höhe 18a. Dies ist die Höhe, die der Höhe der Ruhestellung der Formplatte 16 in der Siegelstation entspricht. Die Formplatte 16 kann also in einer horizontalen Ebene aus der Siegelstation 6 auf die daneben befindliche Übergabeablage 18 bewegt werden. Die Übergabeablage 18 wird, wie beschrieben, von den Oberkanten der Träger 29 gebildet. Um diesen Vorgang zu automatisieren, ist ein in einer horizontalen Ebene arbeitender Arbeitszylinder 26 vorgesehen. Dieser Arbeitszylinder 26 fährt mit einem Mitnehmerkopf 26a in Richtung eines Pfeiles 27 auf die Formplatte 16 zu und kuppelt an diese an. Zum Ankuppeln dient ein Kuppelkopf 26b (Fig.2,3), der in eine Kupplungsmuffe 16b der Formplatte 16 einfällt und mittels Federarmen 16c in dieser festgeklemmt wird. Fig. 2 zeigt die gegenseitigen Stellungen von Mitnehmerkopf 26a und Formplatte 16 vor dem Kuppeln; Fig. 3 zeigt die Teile nach dem Kuppeln. Die Ausführungsform in den Fig. 2 und 3 gilt entsprechend auch für den Arbeitszylinder 23 im Zusammenwirken mit der Formplatte 15.

Der Arbeitszylinder 26 schiebt nun die Formplatte 16 auf die Übergabeablage 18. Die Formplatte 16 kann von dort abgenommen und in eine Parkposition an der Maschine oder in ihrer Nähe gebracht werden. Eine Formplatte 16 anderen Formates wird auf die Übergabeablage 18 aufgelegt und von dem Hubzylinder 23 in die Tiefziehstation eingeschoben. Wenn es die maschinenbaulichen Verhältnisse nicht zulassen, die Formplatte 16 in der Höhe der Ruhestellung abzunehmen oder weiterzuschieben, dann fährt die Verstellvorrichtung 24 die Übergabeablage 18 nach oben oder nach unten, wie es in Fig. 1 dargestellt ist. Von dort aus kann dann der Wechsel der Formplatten 16 von Hand, aber auch maschinell erfolgen. Die Parkposition kann ohne weiteres zum maschinellen Wechsel ausgelegt sein.

Der Wechsel der Formplatten 15 und 16 erfolgt, wie auch aus der Fig. 1 zu entnehmen ist, unterhalb der Folien 14 und 28. Die Folien 14 und 28 werden also vom Wechsel der unteren Arbeitswerkzeuge 15 und 16 nicht betroffen.

Auch der Wechsel der oberen Arbeitswerkzeuge 12 betrifft die Folien 14 und 28 nicht. Zum Wechsel des Siegeloberteiles 12, dem oberen Werkzeug des Werkzeugpaares in der Siegelstation 6, dient eine weitere Übergabeablage 19. Diese Übergabeablage 19 ist keine körperliche Platte. Sie wird, wie beschrieben, von den Oberkanten der Träger 29 gebildet. Die Träger 29 befinden sich beiderseits des Rahmens 2, also außerhalb des Durchzugsbereiches der Folien, und sind mittels eines Hubmotors heb- und senkbar. Während des Betriebes befindet sich das Siegeloberteil 12 in der Siegelstation 6. Beim Wechselvorgang wird das Spiegeloberteil 12 aus der Ruhestellung auf die daneben und auf gleicher Höhe befindliche Übergabeablage geschoben. Auf dem Maschinenrahmen 2 ist ein Magazin 31 vorgesehen, das übereinander mehrere Magazinfächer 32 hat. Durch ein Anheben der Übergabeablage 19 auf die Höhen der verschiedenen Magazinfächer 32 oder dem Belassen der Übergabeablage auf der Höhe der Ruhestellung, die in Fig. 1 dargestellt ist, können mehrere Siegeloberteile 12 in Richtung der Pfeile 33 in die Magazinfächer 32 eines Magazins 31, das sich auf dem Maschinenrahmen 2 befindet, eingeschoben werden. Im Gegenzug werden die Siegeloberteile 12 auf demselben Weg zurück in die Siegelstation eingebracht. Auch in diesem Fall werden die Folien 14 und 28 von dem Wechselvorgang nicht berührt. Die Wechselwege sind insbesondere bei dem Siegeloberteil 12 kurz und schnell zu überwinden.

Die Arbeitszylinder 23 und 26 sowie die Hubgeräte 22, 24 und 30 können pneumatisch, hydraulisch oder elektrisch bewegt werden. Die Tätigkeit der Arbeitszylinder 23 und 26 kann auch durch manuelle Arbeit ersetzt werden.

## Patentansprüche

1. Tiefzieh-Verpackungsmaschine aufweisend eine Format-Schnellwechselvorrichtung und Bearbeitungsstationen (5,6), zu denen eine Tiefziehstation (6), in der mittels Arbeitswerkzeugen (15) aus einer durchlaufenden Unterfolie (14) Aufnahmemulden ausgeformt werden, und eine Siegelstation (5) gehören, in der die Aufnahmemulden nach dem Einbringen von Gegenständen mittels einer ebenfalls durchlaufenden Folie (28) verschlossen werden, wobei die Formen der Aufnahmemulden und der diese umrandenden oberen Verschweißrandbereiche vom Format der zum Einsatz kommenden Arbeitswerkzeuge bestimmt werden, die zum Formatwechsel austauschbar sind, **dadurch gekennzeichnet, dass** die Format-Schnellwechselvorrichtung wenigstens einer Übergabeablage (17,18,19) aufweist, die benachbart und auf gleicher Höhe zu dem in seiner Bearbeitungsstation (5,6) in Ruhestellung befindlichen Arbeitswerkzeug (12,15,16) an die Tiefzieh-Verpackungsmaschine angebaut bzw. in die Tiefzieh-Verpackungsmaschine eingebaut ist, wobei beim Wechsel ein auf die Übergabeablage (17,18,19) überstelltes Arbeitswerkzeug (12,15,16) über die Übergabeablage in eine Parkposition an oder bei der Verpackungsmaschine (1) überstellbar ist, und wobei die Übergabeablage (19) für Arbeitswerkzeuge (12) oberhalb der Folien (14,28) jeweils oberhalb und die Übergabeablage (17,18) für die Arbeitswerkzeuge (15,16) unterhalb der Folien (14,28) jeweils unterhalb der Folien (14,28) angeordnet ist, so dass der Wechsel der Arbeitswerkzeuge (12,15,16) die Folien (14,28) nicht betrifft.

2. Vorrichtung nach Anspruch 1, **dadurch gekennzeichnet, dass** die Übergabeablagen (17,18,19) entweder flächige Übergabeplattformen sind oder von horizontal verlaufenden Oberkanten von Stützgliedern (29) gebildet werden, die Auflageebenen bilden.

3. Vorrichtung nach Anspruch 1 und/oder 2, wobei in der Siegelstation (6) oberhalb der Folien (14,28) als Formatwerkzeuge ein Siegeloberteil (12) vorgesehen ist, **dadurch gekennzeichnet, dass** das Siegeloberteil (12) beim Formatwechsel aus seiner Ruhestellung in der Siegelstation (6) im Maschinenbereich und oberhalb der Folien (14,28) auf Träger (29) der Übergabeablage (19) in einer Übergabeposition aufschiebbar ist, von der aus die Übergabeablage (19) mit dem auf ihm ruhenden Siegeloberteil (12) einem Fach (32) eines Magazins (31) zustellbar ist und dass im Gegenzug ein Siegeloberteil (12) anderen Formates aus dem Magazin (31) über die verstellbare Übergabeablage (19) in die Siegelstation (6) überführbar ist.

4. Vorrichtung nach einem der Ansprüche 1 bis 3, **dadurch gekennzeichnet, dass** die Träger (29) mit der Übergabeablage (19) mittels eines pneumatisch, hydraulisch oder elektrisch betätigten Hubgerätes (30) zu den Niveaus einzelner Fächer (32) des Magazins (31) verfahrbar sind.

5. Vorrichtung nach Anspruch 1 und 2, mit unterhalb der Folien (14,28) wirksamen Formatwerkzeugen, die sich als Formplatten (15,16) in der Tiefziehstation (5) und der Siegelstation (6) befinden, wobei die Formplatte (15) in der Tiefziehstation (5) dem Ausziehen der Aufnahmemulden und die Formplatte (16) in der Siegelstation (6) dem Stützen der Aufnahmemulden beim Aufschweißen der Oberfolie (28) dienen, **dadurch gekennzeichnet, dass** wenigstens eines der Siegelunterteile (16) bzw. Formplatten (15) beim Formatwechsel aus der Ruhestellung in der Tiefziehstation (5) bzw. Siegelstation (6) auf die vor oder hinter dem Werkzeug auf gleicher Höhe befindliche Übergabeablage (17,18) überführbar ist, die, um die Überführung in die Parkposition zu ermöglichen, in einem leicht zugänglichen Bereich des Maschinenrahmens positioniert ist, und dass im Gegenzug eine Formplatte (15,16) aus der Parkposition über die Übergabeablage (17,18) in die entsprechende Bearbeitungsstation (5,6) überführbar ist.

6. Vorrichtung nach Anspruch 1, 2 und/oder 5, **dadurch gekennzeichnet, dass** die Übergabeablage (17,18) mittels einer Verstellvorrichtung (20,24) verstellbar ist.

7. Vorrichtung nach einem oder mehreren der Ansprüche 1, 2, 5 und 6, **dadurch gekennzeichnet, dass** die Verstellvorrichtung (20,24) der Höhenverstellung der Übergabeablage (17,18) dient.

8. Vorrichtung nach einem oder mehreren der Ansprüche 1, 2, 5 bis 7, **dadurch gekennzeichnet, dass** die der Verstellung der Übergabeablage (18) an der Siegelstation (6) dienende Verstellvorrichtung (24) an einer Hebevorrichtung (11) angeordnet ist, mit der die Formplatte (16) in ihre Arbeitsstellung in der Siegelstation (6) anhebbar ist.

9. Vorrichtung nach einem oder mehreren der Ansprüche 1, 2, 5 bis 8, **dadurch gekennzeichnet, dass** zum Verschieben der Formplatten (15,16) aus ihren Ruhestellungen in der Tiefzieh- und/oder Siegelstation horizontal wirksame Stellglieder (23,26) vorgesehen sind.

10. Vorrichtung nach Anspruch 8, **dadurch gekennzeichnet, dass** zum Verschieben der Formplatten (15,16) aus ihren Ruhestellungen in der Tiefzieh- und/oder Siegelstation (5,6) horizontal wirksame pneumatisch, hydraulisch, elektrisch wirkende Hubgeräte (23,26) vorgesehen sind.

11. Vorrichtung nach einem oder mehreren der Ansprüche 1 bis 9, **dadurch gekennzeichnet, dass** die Hubgeräte (23,26) an die Siegelunterteile (16) bzw. Formplatten (15) ankuppelbar sind, um diese aus den Ruhestellungen in der Bearbeitungsstationen (5,6) auf die Übergabeablagen (17,18) oder von diesen zurück in die Ruhestellungen in den Bearbeitungsstationen (5,6) zu fördern.

## Claims

1. Deep drawing packaging machine, exhibiting a size quick-change device and processing stations (5, 6) which incorporate a deep drawing station (6) in which receiving troughs are formed by means of working tools (15) from a lower film (14) as it passes through, and a sealing station (5), in which the receiving troughs are sealed after objects are inserted by means of film (28), also as it passes through, wherein the shapes of the receiving troughs and the upper welding edge areas surrounding them are determined by the size of the working tools used, which tools can be replaced when the size is changed, **characterised in that** the size quick-change device exhibits at least one transfer store (17, 18, 19), which is mounted adjacent to and at the same height as the working tool (12, 15, 16) in the position of rest on the deep drawing packaging machine or inserted in it, wherein a working tool (12, 15, 16) transferred to the transfer store (17, 18, 19) can also be transferred, when changed, via the transfer store to a parking position on or near the packaging machine (1), and wherein the transfer store (19) for working tools (12) above the films (14, 28) is always arranged above, and the transfer store (17, 18) for the working tools (15, 16) below the films (14, 28) is always arranged below the films (14, 28), so that the changing of the working tools (12, 15, 16) does not affect the films (14, 28).

2. Device according to Claim 1, **characterised in that** the transfer stores (17, 18, 19) are either flat transfer platforms or are formed from the horizontally running upper edges of supporting elements (29), which form planes of contact.

3. Device according to Claim 1 and/or 2, wherein a sealing upper section (12) is provided in the sealing station (6) above the films (14, 28), as format tools, **characterised in that** the upper sealing section (12) can be slid up, when the size is changed, from its position of rest in the sealing station (6) in the machine area and above the films (14, 28) to supports (29) of the transfer store (19) in a transfer position from which the transfer store (19), with the upper sealing section (12) resting on it, can be delivered to a compartment (32) of a magazine (31), and **in that** when moving in the opposite direction, an upper sealing section (12) of another size can be transferred from the magazine (31) via the adjustable transfer store (19) into the sealing station (6).

4. Device according to any one of Claims 1 to 3, **characterised in that** the supports (29) with the transfer store (19) can be displaced by means of a pneumatically, hydraulically or electrically actuated lifting device (30) to the levels of individual compartments (32) of the magazine (31).

5. Device according to Claim 1 and 2, with format tools acting below the films (14, 28), which tools are located as form plates (15, 16) in the deep drawing station (5) and sealing station (6), wherein the form plate (15) in the deep drawing station (5) serves to withdraw the receiving troughs, and the form plate (16) in the sealing station (6) to support the receiving troughs when welding on the upper film (28), **characterised in that** at least one of the lower sealing sections (16) or form plates (15) can be transferred, when the size is changed, from the position of rest in the deep drawing station (5) or sealing station (6) to the transfer store (17, 18) located in front of or behind the tool at the same height, which store is positioned in an easily accessible region of the machine frame to allow transfer to the parking position, and **in that**, in the movement in the opposite direction, a form plate (15, 16) from the parking position via the transfer store (17, 18) can be transferred to the corresponding processing station (5, 6).

6. Device according to Claim 1, 2 and/or 5, **characterised in that** the transfer store (17, 18) can be adjusted by means of an adjusting device (20, 24).

7. Device according to one or more of Claims 1, 2, 5 and 6, **characterised in that** the adjusting device (20, 24) serves to adjust the height of the transfer store (17, 18).

8. Device according to one or more of Claims 1, 2, 5 to 7, **characterised in that** the adjusting device (24) serving to adjust the transfer store (18) on the sealing station (6) is arranged on a lifting device (11) with which the form plate (16) can be lifted into its working position in the sealing station (6).

9. Device according to one or more of Claims 1, 2, 5 to 8, **characterised in that** horizontally active adjusting elements (23, 26), are provided of rest for displacing the form plates (15, 16) from their positions in the deep drawing and/or sealing station.

10. Device according to Claim 8, **characterised in that** horizontally active pneumatically, hydraulically or electrically actuated lifting devices (23, 26) are provided for displacing the form plates (15,16) from their positions in the deep drawing and/or sealing station (5,6).

11. Device according to one or more of Claims 1 to 9, **characterised in that** the lifting devices (23, 26) can be connected to the lower sealing sections (16) or form plates (15) in order to convey them from the positions of rest in the processing stations (5, 6) to the transfer stores (17, 18), or from these stores back to the positions of rest in the processing stations (5, 6).

## Revendications

1. Machine d'emballage et d'emboutissage profond comportant un dispositif d'échange rapide de format, ainsi que des postes d'usinage (5, 6) dont font partie un poste d'emboutissage profond (6) dans lequel des cuvettes de réception sont formées, au moyen d'outils de travail (15), dans une feuille inférieure (14) en circulation, et un poste de scellement (5) dans lequel, après introduction d'objets, les cuvettes de réception sont obturées au moyen d'une feuille (28) également en circulation, les formes des cuvettes de réception et des zones de bordure de soudage supérieures entourant celles-ci étant déterminées par le format des outils de travail utilisés, lesquels outils sont échangeables pour le changement de format, **caractérisé en ce que** le dispositif d'échange rapide de format comporte au moins un récepteur de transfert (17, 18, 19) qui est rapporté sur la machine d'emballage et d'emboutissage profond ou intégré à la machine d'emballage et d'emboutissage profond, au voisinage et à la même hauteur que l'outil de travail (12, 15, 16) se trouvant en position de repos dans son poste d'usinage (5, 6), lors de l'échange, un outil de travail (12, 15, 16) placé sur le récepteur de transfert (17, 18, 19), pouvant être transféré par le récepteur de transfert dans une position de garage sur ou près de la machine d'emballage (1), et le récepteur de transfert (19) pour outils de travail (12) au-dessus des feuilles (14, 28) étant disposé dans chaque cas au-dessus, et le récepteur de transfert (17, 18) pour les outils de travail (15, 16) au-dessous des feuilles (14, 28) étant disposé dans chaque cas au-dessous des feuilles (14, 28), ce qui fait que l'échange des outils de travail (12, 15, 16) ne concerne pas les feuilles (14,28).

2. Dispositif selon la revendication 1, **caractérisé en ce que** les récepteurs de transfert (17, 18, 19) sont soit des plateformes de transfert plates, soit ils sont formés par des bords supérieurs s'étendant horizontalement d'organes d'appui (29) qui forment les plans de support.

3. Dispositif selon la revendication 1 et/ou 2, dans lequel au poste de scellement (6) au-dessus des feuilles (14, 28) est prévue, comme outil de formatage, une partie supérieure de scellement (12), **caractérisé en ce que** la partie supérieure de scellement (12) peut être poussée, lors du changement de format, de sa position de repos dans le poste de scellement (6), dans la zone de la machine et au-dessus des feuilles (14, 28), sur des supports (29) du récepteur de transfert (19), dans une position de transfert à partir de laquelle le récepteur de transfert (19) avec la partie supérieure de scellement (12) reposant sur celui-ci, peut être amené à une case (32) d'un magasin (31) et, dans le sens contraire, une partie supérieure de scellement (12) d'un autre format peut être transférée du magasin (31), par le récepteur de transfert (19) réglable, au poste de scellement (6).

4. Dispositif selon l'une des revendications 1 à 3, **caractérisé en ce que** les supports (29) avec le récepteur de transfert (19) sont déplaçables, au moyen d'un dispositif de levage (30) actionné de manière pneumatique, hydraulique ou électrique, vers les niveaux de différentes cases (32) du magasin (31).

5. Dispositif selon les revendications 1 et 2, comportant des outils de formatage agissant au-dessous des feuilles (14, 28), qui se trouvent en tant que plaques de moulage (15, 16) dans le poste d'emboutissage profond (5) et le poste de scellement (6), la plaque de moulage (15) dans le poste d'emboutissage profond (5) servant à emboutir les cuvettes de réception et la plaque de moulage (16) dans le poste de scellement (6) servant à soutenir les cuvettes de réception lors du soudage de la feuille supérieure (28), **caractérisé en ce qu'**au moins l'une des parties inférieures de scellement (16) ou plaque de moulage (15) peut être transférée, lors du changement de format, de la position de repos dans le poste d'emboutissage profond (5) ou poste de scellement (6), sur le récepteur de transfert (17, 18) se trouvant devant ou derrière l'outil, à même hauteur, lequel récepteur de transfert est positionné, pour permettre le passage à la position de garage, dans une zone facilement accessible du cadre de la machine, et **en ce qu'**en sens contraire, une plaque de moulage (15, 16) peut être transférée de la position de garage, par l'intermédiaire du récepteur de transfert (17, 18), au poste d'usinage (5, 6) correspondant.

6. Dispositif selon la revendication 1, 2 et/ou 5, **caractérisé en ce que** le récepteur de transfert (17, 18) est réglable au moyen d'un dispositif de réglage (20, 24).

7. Dispositif selon une ou plusieurs des revendications 1, 2, 5 et 6, **caractérisé en ce que** le dispositif de réglage (20, 24) sert au réglage en hauteur du récepteur de transfert (17, 18).

8. Dispositif selon une ou plusieurs des revendications 1, 2, 5 à 7, **caractérisé en ce que** le dispositif de réglage (24) servant au réglage du récepteur de transfert (18) au poste de scellement (6), est disposé sur un dispositif de levage (11) au moyen duquel la plaque de moulage (16) peut être relevée dans sa position de travail dans le poste de scellement (6).

9. Dispositif selon une ou plusieurs des revendications 1, 2, 5 à 8, **caractérisé en ce que** pour le déplacement des plaques de moulage (15, 16) de leurs positions de repos dans le poste d'emboutissage profond et/ou le poste de scellement, il est prévu des organes de réglage (23, 26) agissant horizontalement.

10. Dispositif selon la revendication 8, **caractérisé en ce que** pour le déplacement des plaques de moulage (15, 16) de leurs positions de repos dans le poste d'emboutissage profond et/ou poste de scellement (5, 6), il est prévu des dispositifs de levage (23, 26) agissant horizontalement et de manière pneumatique, hydraulique ou électrique.

11. Dispositif selon une ou plusieurs des revendications 1 à 9, **caractérisé en ce que** les dispositifs de levage (23, 26) peuvent être accouplés aux parties inférieures de scellement (16) ou plaques de moulage (15), afin de transporter celles-ci de leurs positions de repos dans les postes d'usinage (5, 6) aux récepteurs de transfert (17, 18), ou depuis ceux-ci de retour, dans les positions de repos dans les postes d'usinage (5, 6).
